# EUROPÄISCHE PATENTSCHRIFT

(11) **EP 2 571 715 B1**
(45) Veröffentlichungstag und Bekanntmachung des Hinweises auf die Patenterteilung: **16.07.2014**
(21) Anmeldenummer: 11720037.8
(22) Anmeldetag: 12.05.2011
(51) Int. Cl.: B60L 11/18, B60L 1/02

(54) **INTERAKTION VON THERMOMANAGEMENT UND LADEMANAGEMENT BEI EXTERNEM LADEN**
INTERACTION OF THERMAL MANAGEMENT AND CHARGING MANAGEMENT DURING EXTERNAL CHARGING
INTERACTION ENTRE SYSTÈME DE GESTION D'ÉNERGIE THERMIQUE ET SYSTÈME DE GESTION DE CHARGE DANS LE CAS DE CHARGES EXTERNES

(30) Priorität: 19.05.2010 DE 102010021028
(43) Veröffentlichungstag der Anmeldung: 27.03.2013
(73) Patentinhaber: Audi AG, 85045 Ingolstadt (DE); Schalli, Niklas, 81825 München (DE)
(72) Erfinder: SCHALLI, Niklas, 81825 München (DE)
(74) Vertreter: Herbst, Matthias Heinz
(86) Internationale Anmeldenummer: PCT/EP2011/002344
(87) Internationale Veröffentlichungsnummer: WO 2011/144307

(56) Entgegenhaltungen:
- EP-A1- 2 277 755
- DE-A1- 10 252 292
- GB-A- 2 273 614
- US-A1- 2009 256 523

## Beschreibung

Die Erfindung betrifft die Interaktion von Thermomanagement und Lademanagement bei externem Laden eines Kraftfahrzeugs.

Es sind Plug-in Hybride und Elektrofahrzeuge bekannt, die von extern geladen werden können. Des weiteren ist es bekannt, die Batterie während des Ladevorgangs zu temperieren.

Die Regelung der Energieverteilung während des Ladevorgangs ist oft unflexibel und/oder übermäßig kompliziert.

Ein gattungsgemäßes Regelungsverfahren ist aus der WO 2009/139277 A1 bekannt.

Ein Verfahren zur Regelung der Übertragung von Energie zu einem von einer Batterie mit Strom versorgten Fahrzeug ist in der GB 2 273 614 A beschrieben.

Die US 2009/0256523 A1 beschreibt ein Verfahren zum Laden eines von einem Elektromotor angetriebenen Kraftfahrzeugs.

In der DE 102 52 292 A1 ist ein Verfahren zur Steuerung der Energieverteilung in einem Verkehrsmittel beschrieben. Dabei werden Energiequellen und Energiesenken mit jeweiligen Wertstufen versehen.

Die Aufgabe der vorliegenden Erfindung besteht darin, während eines Ladevorgangs eines Kraftfahrzeug die Verteilung von Energie auf verschiedene Vorrichtungen zum Kühlen und/oder Heizen flexibel und unkompliziert zu regeln.

Diese Aufgabe wird durch die in den unabhängigen Ansprüchen beschriebenen Erfindungen gelöst. Vorteilhafte Weiterbildungen ergeben sich aus den abhängigen Ansprüchen.

Das Thermomanagement eines Kraftfahrzeugs regelt Kühlung-/Heizung von Bauteilen in Form von Motor, Batterie, Leistungselektronik etc. sowie Kühlung-/Heizung von Fahrgastraum, Sitze, Lenkrad etc. für den Komfort. Das Lademanagement regelt die Energieversorgung eines Fahrzeugs aus einer externen Quelle.

In einem Regelungsverfahren für ein Kraftfahrzeug sind vom Thermomanagement an das Lademanagement mehrere Arten der Leistungsanforderung enthaltend
- eine Kühlleistungsanforderung für Bauteile,
- eine Heizleistungsanforderung für Bauteile und
- eine Komfortleistungsanforderung für Fahrgastkomfort übermittelbar. Die Arten der Leistungsanforderung werden vom Lademanagement unterschiedlich priorisiert.

Der Erfindung liegt die Erkenntnis zugrunde, dass sich die Energieversorgung und -verteilung durch das Lademanagement am besten regeln lässt, wenn dieses die Leistungsanforderungen und die Priorität der Leistungsanforderungen des Thermomanagements kennt.

Erfindungsgemäß wird eine Kühlleistungsanforderung für Bauteile höher priorisiert als eine Heizleistungsanforderung für Bauteile, da eine Überhitzung der Bauteile eher zu einem Schaden führt als eine Unterkühlung.

Erfindungsgemäß wird weiterhin eine Heizleistungsanforderung für Bauteile höher priorisiert als eine Komfortleistungsanforderung für Fahrgastkomfort.

Vorzugsweise wird einer Leistungsanforderung mit einer höheren Priorisierung vom Lademanagement mehr Leistung zur Verfügung gestellt als einer Leistungsanforderung mit einer niedrigeren Priorisierung, soweit nicht ausreichend Leistung zur Verfügung steht, um alle Leistungsanforderungen zu befriedigen.

Insbesondere wird vom Lademanagement an das Thermomanagement ein Leistungskontingent übermittelt, das angibt, wie viel Leistung dem Thermomanagement zur Verfügung gestellt wird. Dies muss nicht spezifiziert nach den einzelnen Arten der Leistungsanforderung geschehen, so dass vom Thermomanagement autark eine Aufteilung der Teile des Kontingents auf die einzelnen Leistungsarten erfolgen kann.

Alternativ oder ergänzend wird vom I ademanagement an das Thermomanagement eine Nachricht übermittelt, die angibt, dass eine Komfortleistung vornehmbar ist. Dadurch wird das Thermomanagement in Kenntnis gesetzt, dass genügend Leistung zur Verfügung gestellt werden kann, um auch eine Komfortleistung vorzunehmen.

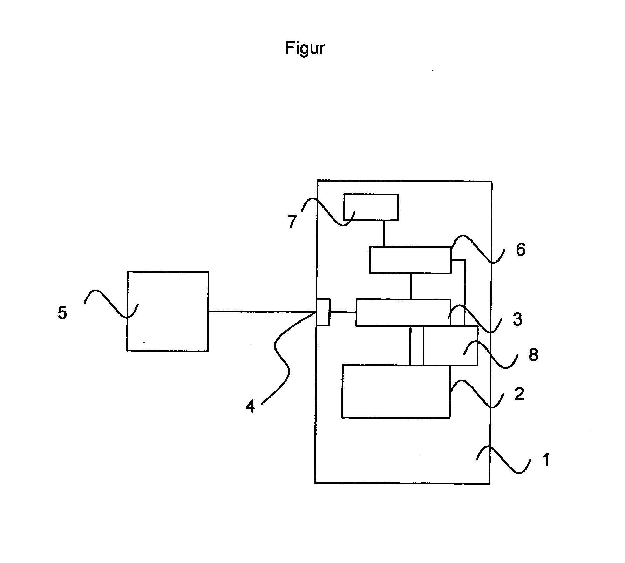

Weitere Merkmale und Vorteile der Erfindung ergeben sich aus der Beschreibung eines Ausführungsbeispiels anhand der Zeichnung. Dabei zeigt die Figur ein Kraftfahrzeug 1.

Das Kraftfahrzeug 1 weist einen Energiespeicher 2 in Form einer Traktionsbatterie auf. Das Kraftfahrzeug 1 ist insbesondere ein Plug-in Hybrid oder ein Elektrofahrzeug, dessen Antrieb aus dem Energiespeicher 2 mit Antriebsenergie versorgt wird.

Der Energiespeicher 2 lässt sich durch einen Ladevorgang beladen und gegebenenfalls auch entladen. Dazu ist er mit einer Lademanagementvorrichtung 3 in Form eines Umrichters mit entsprechender Regelung verbunden. Der Umrichter ist seinerseits mit einem fahrzeugseitigen Leistungskontakt 4 verbunden, in den ein Ladekabel zum Verbinden mit einer Ladestation 5 gesteckt ist.

Eine Thermomanagementvorrichtung 6 kommuniziert über einen CAN-Bus mit der Lademanagementvorrichtung 3 einer Klimaanlage 7 zur Klimatisierung eines Fahrgastraums des Kraftfahrzeugs 1 und einer Heizung-/Kühlung 8 für die Bauteile Umrichter und Batterie 2.

Von der Thermomanagementvorrichtung 6 sind
1. eine Kühlleistungsanforderung für Bauteile,
2. eine Heizleistungsanforderung für Bauteile und
3. eine Komfortleistungsanforderung für den Innenraum an die Lademanagementvorrichtung 3 übermittelbar. Die drei Arten von Anforderungen (Wünsche) werden unterschiedlich priorisiert. Dabei wird eine Kühlleistungsanforderung für Bauteile höher priorisiert als eine Heizleistungsanforderung für Bauteile, die wiederum höher priorisiert wird als eine Komfortleistungsanforderung für den Innenraum.

Von der Lademanagementvorrichtung 3 sind an die Thermomanagementvorrichtung 6 übermittelbar
1. ein Leistungskontingent, das angibt, wie viel Leistung dem Thermomanagement zur Verfügung gestellt wird, und/oder
2. eine Nachricht (Bit: enable_Innenraumkonditionierung), die angibt, dass eine Komfortleistung (Inneraumkonditionierung, Klimatisierung) vorgenommen werden kann.

Durch diese Art der Regelung wird die Energie aus der externen Quelle 5 optimal den Verbrauchern zugeteilt.

## Patentansprüche

1. Regelungsverfahren für das externe Laden eines Kraftfahrzeugs (1) mit einem die Kühlung und Heizung von Bauteilen des Kraftfahrzeugs (1) regelnden Thermomanagement und einem die Energieversorgung des Kraftfahrzeugs (1) aus einer externen Quelle regelnden Lademanagement, bei dem vom Thermomanagement an das Lademanagement mehrere Arten der Leistungsanforderung enthaltend
- eine Kühlleistungsanforderung für Bauteile,
- eine Heizleistungsanforderung für Bauteile und
- eine Komfortleistungsanforderung für Fahrgastkomfort übermittelbar sind, **dadurch gekennzeichnet, dass** die Arten der Leistungsanforderung vom Lademanagement unterschiedlich priorisiert werden, wobei eine Kühlleistungsanforderung für Bauteile höher priorisiert wird als eine Heizleistungsanforderung für Bauteile, und wobei eine Heizleistungsanforderung für Bauteile höher priorisiert wird als eine Komfortleistungsanforderung für Fahrgastkomfort.

2. Regelungsverfahren nach Anspruch 1,
**dadurch gekennzeichnet,**
**dass** einer Leistungsanforderung mit einer höheren Priorisierung vom Lademanagement mehr Leistung zur Verfügung gestellt wird als einer Leistungsanforderung mit einer niedrigeren Priorisierung.

3. Regelungsverfahren nach einem der vorhergehenden Ansprüche,
**dadurch gekennzeichnet,**
**dass** vom Lademanagement an das Thermomanagement ein Leistungskontingent übermittelt wird, das angibt, wie viel Leistung dem Thermomanagement zur Verfügung gestellt wird.

4. Regelungsverfahren nach einem der vorhergehenden Ansprüche,
**dadurch gekennzeichnet,**
**dass** vom Lademanagement an das Thermomanagement eine Nachricht übermittelt wird, die angibt, dass eine Komfortleistung vornehmbar ist.

## Claims

1. Control method for the external charging of a motor vehicle (1) having a thermal management controlling the cooling and heating of components of the motor vehicle (1) and a charging management controlling the supply of energy to the motor vehicle (1) from an external source, wherein several types of power demand can be transmitted from the thermal management to the charging management, which comprise
- a cooling power demand for components,
- a heating power demand for components, and
- a comfort power demand for passenger comfort, and
**characterised in that** the types of power demand are given different priorities by the charging management, a cooling power demand for components being given a higher priority than a heating power demand for components, and a heating power demand for components being given a higher priority than a comfort power demand for passenger comfort.

2. Control method according to claim 1, **characterised in that** the charging management provides more power to a power demand having a higher priority than to a power demand having a lower priority.

3. Control method according to one of the preceding claims, **characterised in that** a power quota is transmitted from the charging management to the thermal management which indicates how much power is being made available to the thermal management.

4. Control method according to one of the preceding claims, **characterised in that** a message is transmitted from the charging management to the thermal management which indicates that a comfort power can be implemented.

## Revendications

1. Procédé de régulation de la charge externe d'un véhicule automobile (1) avec un système de gestion d'énergie thermique régulant le refroidissement et le chauffage de composants du véhicule automobile (1) et un système de gestion de charge régulant l'alimentation en énergie du véhicule automobile (1) depuis une source externe, dans lequel on peut transmettre du système de gestion d'énergie thermique au système de gestion de charge plusieurs types de demande de prestation contenant :
- une demande de prestation de refroidissement pour composants,
- une demande de prestation de chauffage pour composants et
- une demande de prestation de confort pour le confort des passagers,
**caractérisé en ce que** les types de demande de prestation reçoivent une priorité différente de la part du système de gestion de charge, dans lequel une demande de prestation de refroidissement pour composants reçoit une plus grande priorité qu'une demande de prestation de chauffage pour composants et dans lequel une demande de prestation de chauffage pour composants reçoit une plus grande priorité qu'une demande de prestation de confort pour le confort des passagers.

2. Procédé de régulation selon la revendication 1, **caractérisé en ce que**
le système de gestion de charge met plus de prestation à la disposition d'une demande de prestation de plus grande priorité que d'une demande de prestation de priorité plus basse.

3. Procédé de régulation selon l'une quelconque des revendications précédentes,
**caractérisé en ce que**
l'on transmet du système de gestion de charge au système de gestion thermique un contingent de prestations qui indique combien de prestation est mise à la disposition du système de gestion thermique.

4. Procédé de régulation selon l'une quelconque des revendications précédentes,
**caractérisé en ce que**
l'on transmet du système de gestion de charge au système de gestion thermique une information qui indique qu'une prestation de confort peut être appliquée.
